# EUROPEAN PATENT APPLICATION

(11) **EP 2 268 032 A2**
(43) Date of publication of application: **29.12.2010**
(21) Application number: 10180770.9
(22) Date of filing: 22.09.2004
(51) Int. Cl.: H04N 7/26, H04N 7/30, H04N 7/50

(54) **Image signal processing method and apparatus**

(30) Priority: 15.10.2003 JP 2003355549; 18.08.2004 JP 2004238673
(62) Divisional of application: 04022571.6
(71) Applicant: NTT DoCoMo, Inc., Tokyo 100-6150 (JP)
(72) Inventor: Boon, Choong Seng, Chiyoda-ku, Tokyo 100-6150 (JP); Tan, Thiow Keng, Chiyoda-ku, Tokyo 100-6150 (JP)
(74) Representative: Viering, Hans-Martin

(57) **Abstract**

An image signal processing apparatus 1 has at least an input terminal 11, a DCT transformer 13, a low-pass filter 14, a DCT transformer 16, a functional operation processor 17, and an inverse DCT transformer 18. With input of an image at the input terminal 11, the DCT transformer 13 acquires frequency components of the input image. On the other hand, the low-pass filter 14 performs a filtering process on the input image from the input terminal 11 to generate a filtered image. The DCT transformer 16 acquires frequency components of this image. The functional operation processor 17 performs a functional operation between some of the frequency components of the images before and after the filtering to generate frequency components of a function-operated image. The inverse DCT transformer 18 transforms the frequency components into pixel values and outputs them.

## Description

### BACKGROUND OF THE INVENTION

### Field of the Invention

The present invention relates to an image signal processing method, an image signal processing apparatus, and an image signal program and, more particularly, to techniques of removing image distortion and enhancing sharpness of an image.

### Related Background Art

Conventionally, compression coding techniques are used for efficiently carrying out transmission and storage of data of still images and moving pictures. Among the compression coding techniques, typical systems are JPEG (Joint Photographic Experts Group) in the case of still images and MPEG (Moving Picture Experts Group) in the case of moving pictures.

Compression coding of an image removes part of a signal, and thus a reproduced image suffers coding distortion such as the block boundary effect and ringing. Specifically, the quantization process for reduction of data volume removes high frequency components of an image signal. Particularly, in the case of the JPEG and MPEG systems, since the quantization process is carried out in block units, the quantization of high frequency components causes discontinuity at boundaries between blocks. This leads to occurrence of block noise. In order to reduce the influence of coding distortion, it is effective to use a low-pass filter for filtering out high frequency components of the reproduced image. In addition, an edge enhancement process is effective for enhancing sharpness of a filtered image.

Taken images, not only compressed images but also non-compressed images, can contain noise because of noise peculiar to photographing apparatus such as cameras or because of shortage of light sources in photographic environments. Use of a denoising filter is effective for removing such noise.

The methods about the reduction of noise and the enhancement of sharpness are described, for example, in
Non-patent Document 1 below.
[Non-patent Document 1] ANIL K. Jain, "Fundamentals of Digital Image Processing," Prentice Hall 1989, Chapter 7

### SUMMARY OF THE INVENTION

However, the use of the low-pass filter and the enhancement of edge part will result in also affecting the original frequency components of the input image. Namely, the use of the low-pass filter will result in restoring coefficients of high frequency components absent in an input image, while largely varying values of coefficients of the original low frequency components of the input image. The edge enhancement process is effective for edge part, but achieves no enhancement of the other part at all. For this reason, the influence of the low-pass filter is left to cause a drawback of blur of an image.

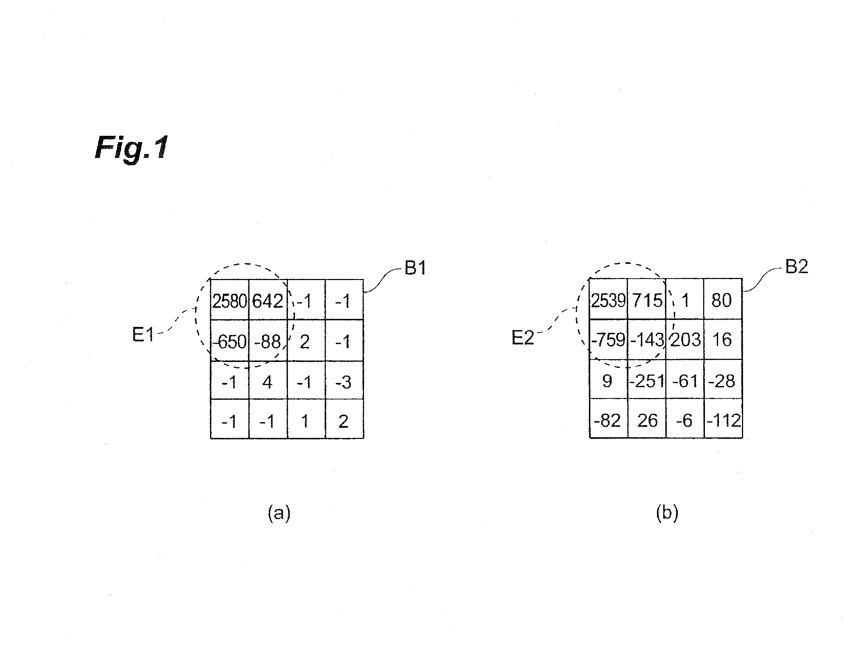

It will be specifically described with reference to Fig. 1(a) and Fig. 1(b). Fig. 1(a) is a diagram showing coefficients of frequency components of block B1 existing in an input image. Fig. 1(b) is a diagram showing coefficients of frequency components of block B2 existing in the same input image through the filtering and edge enhancement processes. It is seen from comparison between the two diagrams that low frequency components E1 of block B1 underwent change in value to low frequency components E2 of block B2 through the processes. This change of frequency components leaves out details of the block to cause blur of the input image. This problem also arises in conversion of resolution of an image, particularly, in upsampling of image size.

An object of the present invention is to relieve the blur of the image subject to the reduction of the coding distortion, the edge enhancement, and the process for conversion of resolution to maintain the original details of the input image.

In order to achieve the above object, an image signal processing method according to the present invention comprises: an importing step of importing a processing object image; a generating step of performing a predetermined filtering process on the processing object image to generate a filtered image; and an operation performing step of performing a functional operation between at least a portion of frequency components of the filtered image and at least a portion of frequency components of the processing object image.

Another image signal processing method according to the present invention comprises: an importing step of importing a processing object image; a first acquiring step of acquiring frequency components of the processing object image; a first generating step of performing a predetermined filtering process on the processing object image to generate a filtered image; a second acquiring step of acquiring frequency components of the filtered image; a second generating step of performing a functional operation between at least a portion of the frequency components of the filtered image and at least a portion of the frequency components of the processing object image to generate frequency components of a function-operated image; and a transforming step of transforming the frequency components of the function-operated image into pixel values.

An image signal processing apparatus according to the present invention comprises: importing means for importing a processing object image; first acquiring means for acquiring frequency components of the processing object image; first generating means for performing a predetermined filtering process on the processing object image to generate a filtered image; second acquiring means for acquiring frequency components of the filtered image; second generating means for performing a functional operation between at least a portion of the frequency components of the filtered image and at least a portion of the frequency components of the processing object image to generate frequency components of a function-operated image; and transforming means for transforming the frequency components of the function-operated image into pixel values.

According to these aspects of the invention, after the predetermined filtering process is performed on the input image, the input image after the process is made to reflect some or all of the frequency components of the input image before the process. This makes it feasible to also achieve the effect of the filtering process, while maintaining the original signal characteristics of the input image. Particularly, the functional operation between some or all of the frequency components of the input image after the process and with some or all of the frequency components of the input image before the process suppresses the deterioration of the details of the image due to the reduction of coding distortion and the edge enhancement. This results in improvement in quality of image.

An image signal processing program according to the present invention is a program for letting a computer implement: an importing function of importing a processing object image; a first acquiring function of acquiring frequency components of the processing object image; a first generating function of performing a predetermined filtering process on the processing object image to generate a filtered image; a second acquiring function of acquiring frequency components of the filtered image; a second generating function of performing a functional operation between at least a portion of the frequency components of the filtered image and at least a portion of the frequency components of the processing object image to generate frequency components of a function-operated image; and a transforming function of transforming the frequency components of the function-operated image into pixel values. By producing and distributing this program, it becomes feasible to let even the conventional computers readily and promptly implement the functions of the image signal processing apparatus according to the present invention, in addition to the aforementioned operational effect.

In the image signal processing apparatus of the present invention, the second generating means can be configured to replace at least a portion of the frequency components of the filtered image with at least a portion of the frequency components of the processing object image to generate the frequency components of the function-operated image.

Furthermore, in the image signal processing apparatus of the present invention, the second generating means may be configured to perform a weighted addition with at least a portion of the frequency components of the filtered image and at least a portion of the frequency components of the processing object image to generate the frequency components of the function-operated image. According to the present invention, how much the effect of the filtering process should be left can be readily adjusted in improvement in quality of the image by properly selecting values of weights used in the weighted addition.

In the foregoing image signal processing methods, image signal processing apparatus, and image signal program, the filtering process comprises a process of converting the filtered image into an image in a resolution (image size) different from that of the processing object image. This can relieve the blur caused with change of frequency components, not only for images subject to the coding distortion reducing process and the edge enhancement process but also for images subject to the resolution conversion process. As a result, it becomes feasible to maintain the original details of the input image.

The present invention relieves the blur of the image subject to the coding distortion reduction and the edge enhancement or to the process for conversion of resolution, while maintaining the original details of the input image.

### BRIEF DESCRIPTION OF THE DRAWINGS

Fig. 1 is a diagram showing coefficients of frequency components of a block present in an input image and coefficients of frequency components of a block present in an input image after filtering and edge enhancement, in the prior art.
Fig. 2 is a block diagram showing a functional configuration of an image signal processing apparatus in a first embodiment of the present invention.
Fig. 3 is a flowchart for illustrating an image signal processing.
Fig. 4 is a flowchart for illustrating a functional operation process executed as one process in the image signal processing.
Fig. 5 is a flowchart for illustrating a DCT coefficient determining process executed as one process in the functional operation process.
Fig. 6 is a diagram showing an example of weight values for DCT coefficients of block A and an example of weight values for DCT coefficients of block B.
Fig. 7 is a diagram showing another example of weight values for DCT coefficients of block A and another example of weight values for DCT coefficients of block B.
Fig. 8 is an illustration showing a data configuration of an image signal processing program according to the present invention.
Fig. 9 is an illustration showing a configuration example of a storage area for an image signal processing program, an example of a recording medium in which an image signal processing program is stored and a state in which a recording medium is loaded in a drive connected to a computer.
Fig. 10 is a block diagram showing a functional configuration of an image signal processing apparatus in a second embodiment of the present invention.
Fig. 11 is a diagram showing a state in which a divided block is transformed by DCT into signals A(i,j) and B(i,j) in the frequency domain, in the second embodiment and a state in which coefficients D2 are replaced by coefficients C2 or in which coefficients D3 are replaced by coefficients C1.

### DESCRIPTION OF THE PREFERRED EMBODIMENTS

### First Embodiment

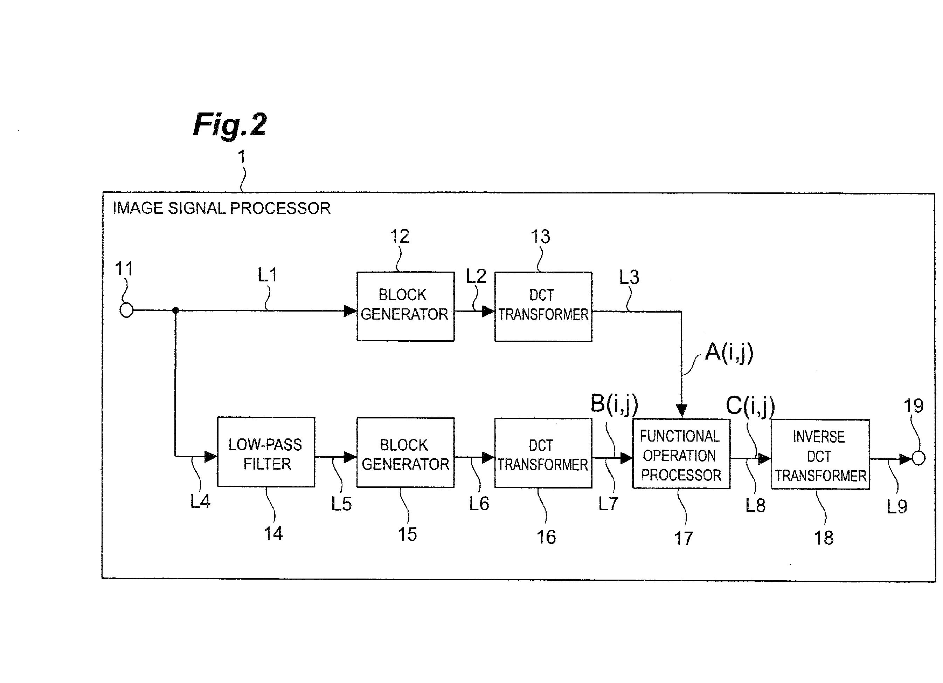

The first embodiment of the present invention will be described below with reference to Figs. 2 to 7.

First, a configuration will be described. Fig. 2 is a block diagram showing a functional configuration of an image signal processing apparatus in the present embodiment. As shown in Fig. 2, the image signal processing apparatus 1 is comprised of an input terminal 11 (corresponding to the importing means), a block generator 12, a discrete cosine (DCT: Discrete Cosine Transform) transformer 13 (corresponding to the first acquiring means), a low-pass filter 14 (corresponding to the first generating means), a block generator 15, a DCT transformer 16 (corresponding to the second acquiring means), a functional operation processor 17 (corresponding to the second generating means), an inverse DCT transformer 18 (corresponding to the transforming means), and an output terminal 19.

An image from a decoder compatible with MPEG-4 AVC/H.264 is fed to the input terminal 11. The input image may also be one outputted from decoders compatible with the other coding systems such as MPEG-1 and H.263, in addition to H.264. Furthermore, the input image may be one outputted from still-image and moving-picture taking apparatus or from a scanner.

The block generator 12 divides the input image from the input terminal 11 into a plurality of blocks each consisting of N×M pixels. In the present embodiment N=M=4, but the number of pixels in each block is not limited to this value as long as it is an integer sufficiently smaller than the total number of pixels of the input image.

The DCT transformer 13 transforms each of the blocks generated by the block generator 12, into a signal in the frequency domain. The present embodiment uses 4×4 DCT operation, but the transformation is not limited to this as long as it can transform the input from the block generator 12 into data in the frequency domain. The DCT transformer 13 outputs an output signal A(i,j) via a signal line L3 to the functional operation processor 17.

The low-pass filter 14 filters out high frequency components of the input image from the input terminal 11, and outputs a filtered image. The present embodiment employs a 3-tapped filter of (1, 2, 1), but the low-pass filter is not limited to this. In a case where the input image is an image decompressed from compressed data, the low-pass filter 14 adaptively adjusts strength of the filter, using information such as a quantization parameter used in compression of the image or a coding mode indicating a prediction method. In this case, however, it is necessary to import the above information from an external device (not shown).

The low-pass filter 14 is also able to execute a process for enhancing sharpness of the input image. For enhancing sharpness, the low-pass filter 14 detects an edge part in the input image, calculates a differential signal of the detected edge part, and then adds the calculation result to the edge part in the original image.

The block generator 15 has a function similar to that of the block generator 12. The block generator 15 receives the input image subject to the filtering process from the low-pass filter 14 and then divides this image into blocks each consisting of 4x4 pixels.

The DCT transformer 16 has a function similar to that of the DCT transformer 13. The DCT transformer 16 transforms each of the blocks generated by the block generator 15, into a signal B(i,j) in the frequency domain. In the present embodiment the block generator 15 is located downstream of the low-pass filter 14, but in a reverse arrangement the DCT transformer 16 performs filtering of each block in the input image after block generation. In this case, the DCT transformer 16 executes the filtering process across adjacent blocks.

The functional operation processor 17 performs a predetermined functional operation using input of signals A(i,j), B(i,j) after the DCT operation, and outputs a signal C(i,j). The details of the operation process will be described later, but the functional operation processor 17 makes the signal B(i,j) reflect some of frequency components of the signal A(i,j), and outputs the signal C(i,j).

The inverse DCT transformer 18 transforms the input signal C(i,j) from the signal in the frequency domain into an image signal in the space domain, and outputs it to the output terminal 19.
A frame memory not shown is connected to the output terminal 19. The inversely transformed image signal is temporarily stored in the frame memory. When image signals corresponding to one image are stored up, they are fed to a display device (not shown).

The present embodiment is configured to pass the input image through the block generator 12 and the DCT transformer 13 in order to obtain the signal A(i,j), but, in a case where 4×4 DCT coefficients are fed from the outside, the block generator 12 and the DCT transformer 13 are not essential components. Particularly, in a case where a decoder compliant with H.264 is connected to the input terminal 11, the DCT coefficients may be directly fed from the decoder to the functional operation processor 17.

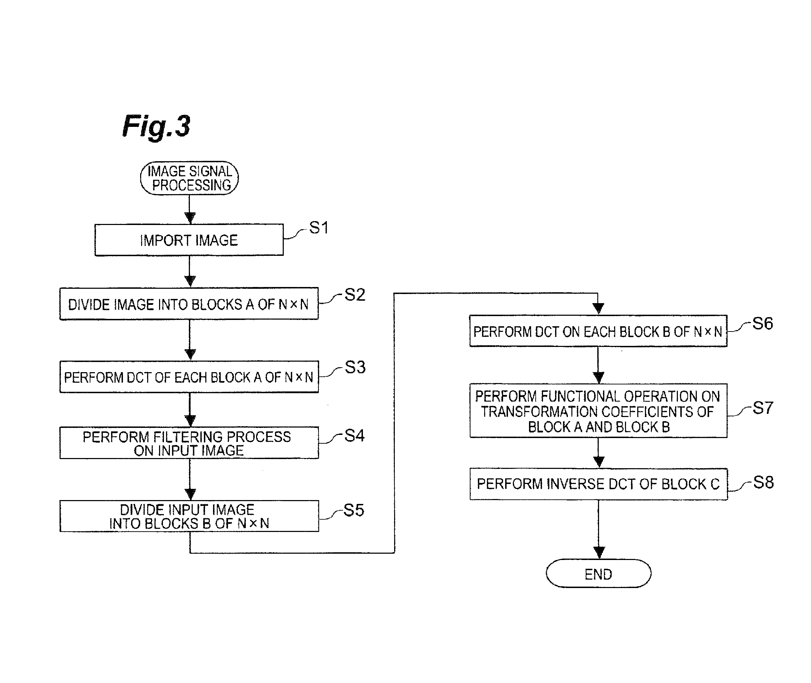

The operation will be described below. In addition, each of steps forming an image signal processing method according to the present invention will be described.
First, at S1 in Fig. 3 an image as an object of processing is fed into the image signal processing apparatus 1. The input image is, for example, an image decompressed from a compressed image, or an image taken by a photographing device. At S2 the input image is divided into blocks A of N×N pixel format. In the present embodiment N=4. Subsequently, each N×N block A is transformed by DCT (S3).

At S4 the input image is subjected to the filtering process and thereafter the filtered image is divided into blocks B of N×N pixel format (S5). Each N×N block B forming the divided image is transformed by DCT (S6). At S7, a functional operation is performed on transformation coefficients obtained at S3 and at S6. In the present embodiment some or all of the transformation coefficients of block A replace transformation coefficients of block B corresponding thereto, thereby generating a block C. Thereafter, the block C is inversely transformed by inverse DCT (S8) and the inversely transformed image is outputted as an image signal.
The sequential processes at S1 to S8 are carried out for all the blocks forming one input image.

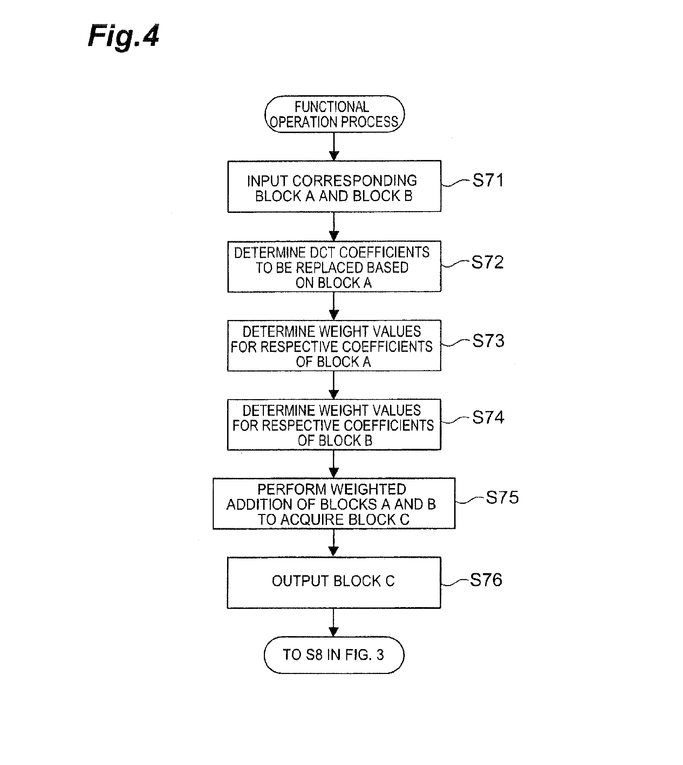

Next, the functional operation process (S7 in Fig. 3) executed by the functional operation processor 17 will be described with reference to the flowchart of Fig. 4.
First, S71 is to accept input of a block A (a block of an original input image) after transformed into the frequency domain and a block B (a block of a filtered image) after transformed into the frequency domain. Here the block A is a block at a position corresponding to the block B in the image after the filtering process, in the image before the filtering process.

S72 is to determine DCT coefficients as objects of the functional operation in the block B, i.e., DCT coefficients as objects of replacement, based on the signal A(i,j) of the block A. The determination of coefficients is implemented by one of three types of techniques described below.

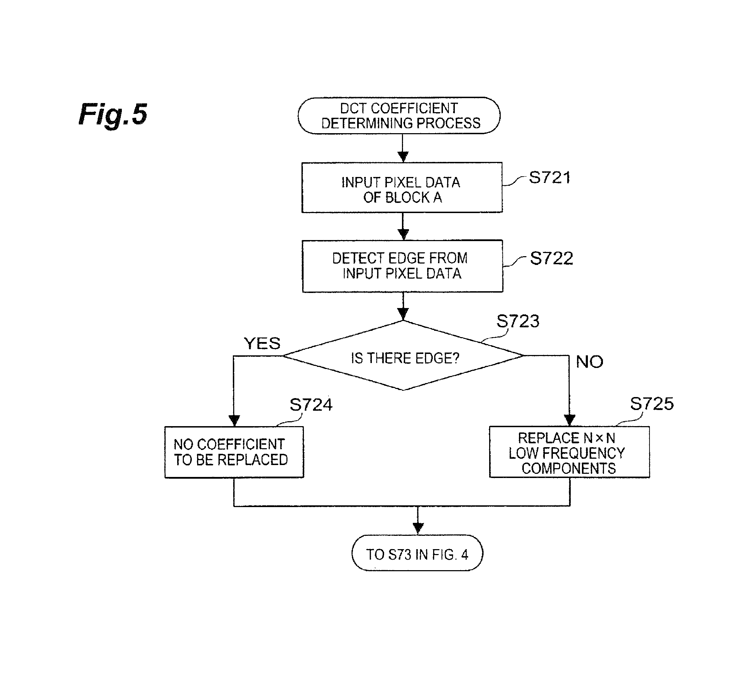

The first technique uses M×M low frequency components as objects of the functional operation. M is, for example, 2, but is not limited to it.
The second technique uses frequency components whose absolute value exceeds a predetermined threshold, out of those of the block A, as objects of the functional operation. The threshold is, for example, 16, but is not limited to it.
The third technique contains a process of determining whether the block A contains an edge part. The third technique will be detailed below with reference to the flowchart of Fig. 5.

The DCT coefficient determining process is executed by the functional operation processor 17.
At S721 pixel data of a block A is fed into the functional operation processor 17. This data feed can be implemented by feeding the output from the block generator 12 directly to the functional operation processor 17 without passage trough the DCT transformer. The next step is to try to detect an edge part in the block A, using the input pixel data (S722). Since the edge detection process is a well-known and commonly-used image analysis technology, the illustration and detailed description thereof are omitted herein, but it is implemented, for example, by the Sobel method or by the Canny method.

When the above trial results in detecting an edge part (S723; YES), the flow moves to S724 to determine that the number of coefficients as objects of replacement is "0." Therefore, the filtered block B is directly outputted as a block C. In contrast to it, when no edge part is detected (S723; NO), it is determined that there is no edge in the block A, and the flow moves to S725. S725 is to determine N×N (N=2) low frequency components as objects of replacement.

Returning to Fig. 4, after the determination of the coefficients as objects of the functional operation, weight values as multipliers are determined for respective coefficients of the block A and for respective coefficients of the block B (S73 and S74). Particularly, in the third technique, the DCT coefficient determining process (cf. Fig. 5) output a block with an edge part enhanced, as it is. At the same time, a portion of the original signal is reflected in a block without an edge part. This enables output of a sharp high-quality image.

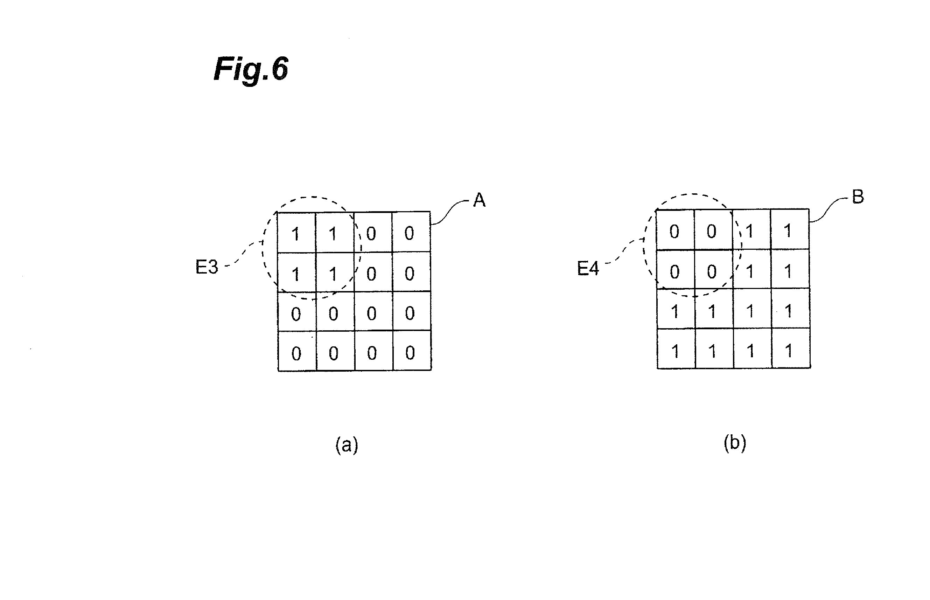

Fig. 6(a) is a diagram showing an example of weight values determined at S73. As shown in Fig. 6(a), the weight values as multipliers for the respective coefficients of a block A (a block of the original image) are different among the components. For example, the weight values for 2×2 low frequency components E3 are "1," while the weight values for the other components all are "0."

Fig. 6(b) shows an example of the weight values determined at S74. As shown in this diagram, the weight values as multipliers for the respective coefficients of a block B (a filtered block) are also different among the components. For example, the weight values for 2×2 low frequency components E4 are "0, " while the weight values for the other components all are "1."

The functional operation processor 17 multiplies the coefficients of the block A by the weight values determined at S73, multiplies the coefficients of the block B by the weight values determined at S74, and then adds these multiplication results. This operation results in generating a block C (S75), and it is fed to the inverse DCT transformer 18 (S76).

Use of the weight values shown in Fig. 6 (a) and Fig. 6(b) yields the same result as in the case where the 2×2 low frequency components of the block B are simply replaced with the 2x2 low frequency components of the block A. In the use of the weight values shown in Fig. 6(a) and in Fig. 6(b), therefore, the processes of S72 to S74 in Fig. 4 can be omitted.

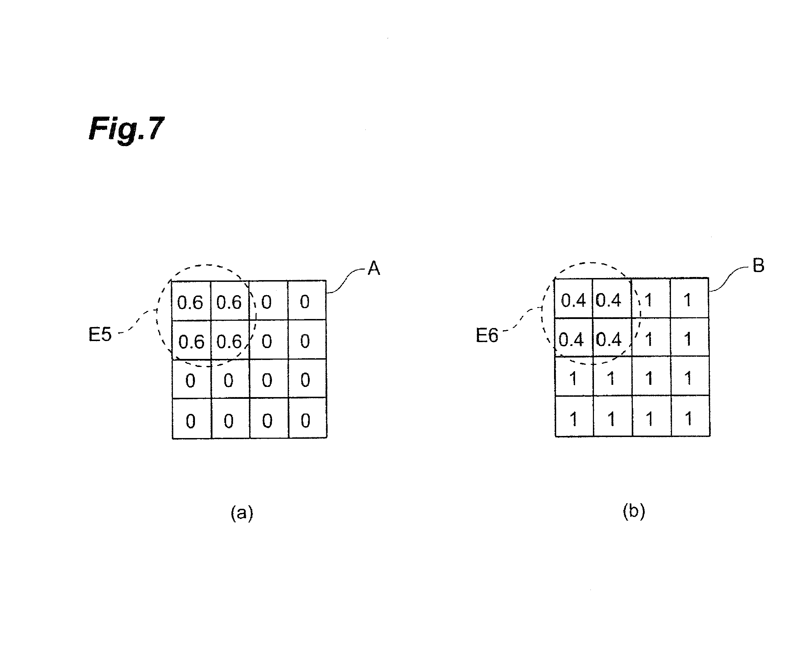

Fig. 7(a) is a diagram showing another example of the weight values determined at S73. As shown in Fig. 7(a), the weight values for 2×2 low frequency components E5 among the coefficients of a block A (a block of the original image) are "0.6," and the weight values for the other components all are "0." As shown in Fig. 7(b), the weight values for 2×2 low frequency components E6 among the coefficients of a block B (a filtered block) are "0.4," and the weight values for the other components all "1."

A weighted addition of the blocks A, B is performed using the weight values determined as described above, so as to generate a block C. In this case, the functional operation processor 17 adds the 2×2 low frequency components of the block A to those of the block B at the fixed rate, thereby achieving the effect of improvement in degradation of image quality, while leaving the effect of the filtering process. The present embodiment illustrated "0 and 1," "0.6 and 0.4," and "1 and 0" as combinations of the weight values of block A and block B, but a combination of values can be arbitrarily determined.

The present invention is not limited to the contents described in the above embodiment, but can adopt appropriately modified forms within the scope not departing from the spirit of the invention. For example, the present embodiment assumes the processes in the space and frequency domains of the image divided in the two-dimensional spatial directions. However, it is also possible to adopt a configuration wherein a plurality of temporally consecutive images are together divided into blocks in the time direction and wherein the filtering process, frequency transformation process, and functional operation process are carried out on the time axis. In addition, the wavelet transformation may be adopted instead of the DCT.

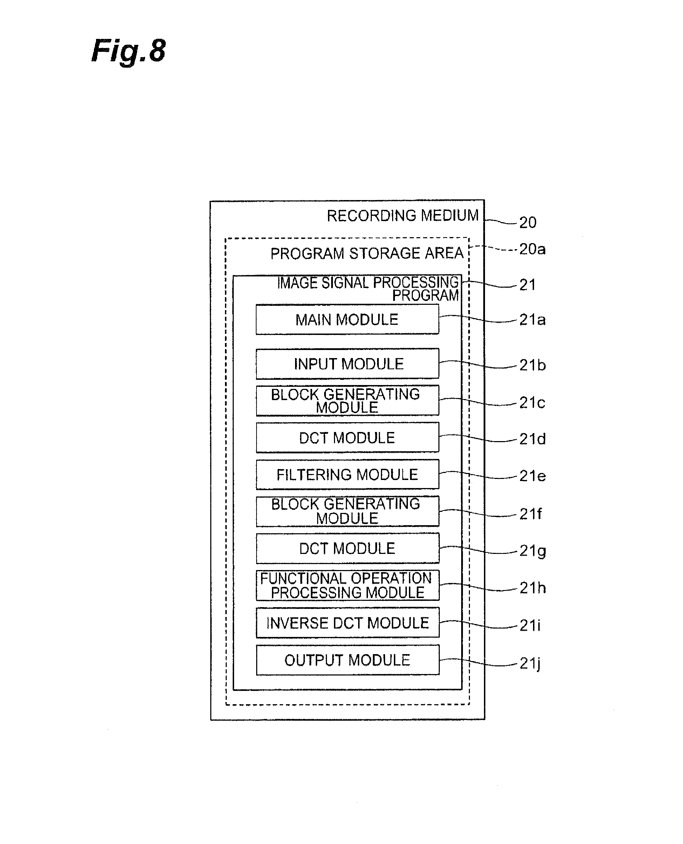

Lastly, a program for implementing the image signal processing method according to the present invention will be described with reference to Fig. 8.
As shown in Fig. 8, the image signal processing program 21 is stored in a program storage area 20a formed in a recording medium 20. The image signal processing program 21 can be executed by computers including portable terminals. The image signal processing program 21 has a main module 21a for totally controlling the image signal processing, a later-described input module 21b, a block generating module 21c, a DCT module 21d, a filtering module 21e, a block generating module 21f, a DCT module 21g, a functional operation processing module 21h, an inverse DCT module 21i, and an output module 21j. Functions implemented by execution of these modules are similar to those of the components of the image signal processing apparatus 1 described above.

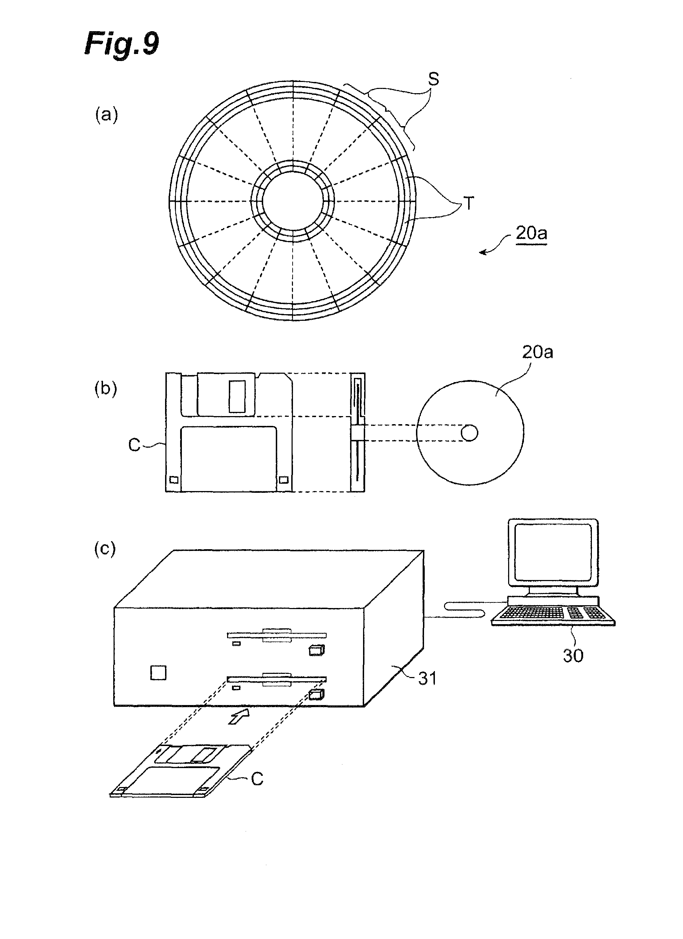

When the image signal processing program 21 is recorded in the recording medium 20, it enables the computers including the portable terminals to readily execute the processes described in the above embodiment. More specifically, the image signal processing program 21 is stored, for example, in a program storage area 20a of a floppy disk having a physical format shown in Fig. 9(a). A plurality of tracks T are concentrically formed from the outer circumference toward the inner circumference in the program storage area 20a, and each track T is segmented in the angular direction into sixteen sectors S.

As shown in Fig. 9(b), the program storage area 20a is built in a floppy disk case C, thereby forming a floppy disk as a recording medium 20. As shown in Fig. 9(c), when the recording medium 20 is loaded in a floppy disk drive 31 connected through a cable to a well-known and commonly-used computer system 30, the image signal processing program 21 shown in Fig. 8 can be read out of the recording medium 20. Then the image signal processing program 21 is transferred through the floppy disk drive 31 to the computer system 30 and then executed.

The recording medium 20 is not limited to the floppy disk, but may be any type of recording media capable of recording a program, such as hard disks, IC (Integrated Circuit) cards, ROM (Read Only Memory), and so on.

### Second Embodiment

The first embodiment used the low-pass filter 14 (cf. Fig. 2), but an upsampling filter may replace it to convert a resolution (image size) of an input image from the input terminal.

Differences of the present embodiment from the first embodiment will be described below.

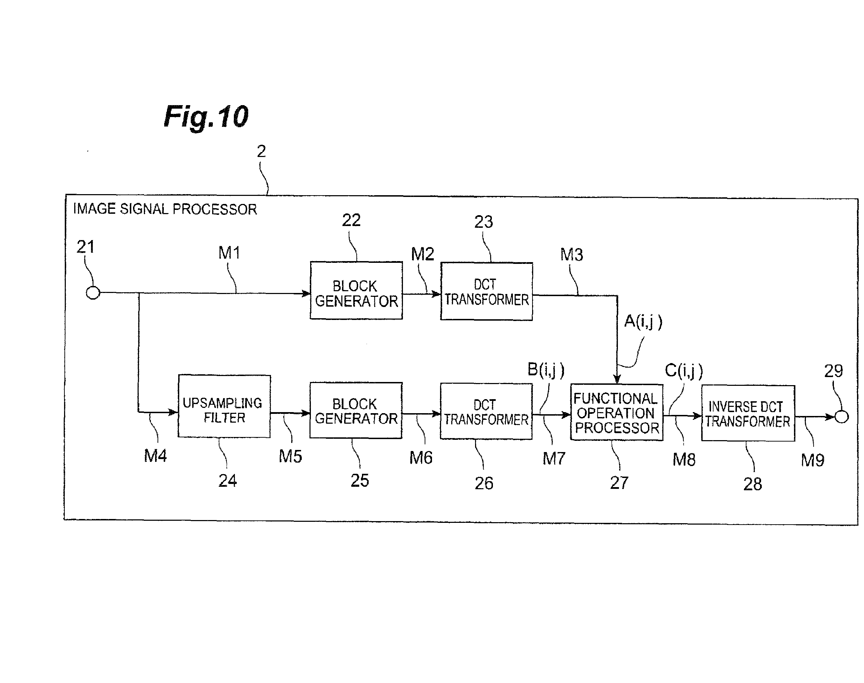

Fig. 10 is a block diagram showing a functional configuration of an image signal processing apparatus in the present embodiment. As shown in Fig. 10, the image signal processing apparatus 2 is comprised of an input terminal 21 (corresponding to the importing means), a block generator 22, a DCT transformer 23 (corresponding to the first acquiring means), an upsampling filter 24 (corresponding to the first generating means), a block generator 25, a DCT transformer 26 (corresponding to the second acquiring means), a functional operation processor 27 (corresponding to the second generating means), an inverse DCT transformer 28 (corresponding to the transforming means), and an output terminal 29.

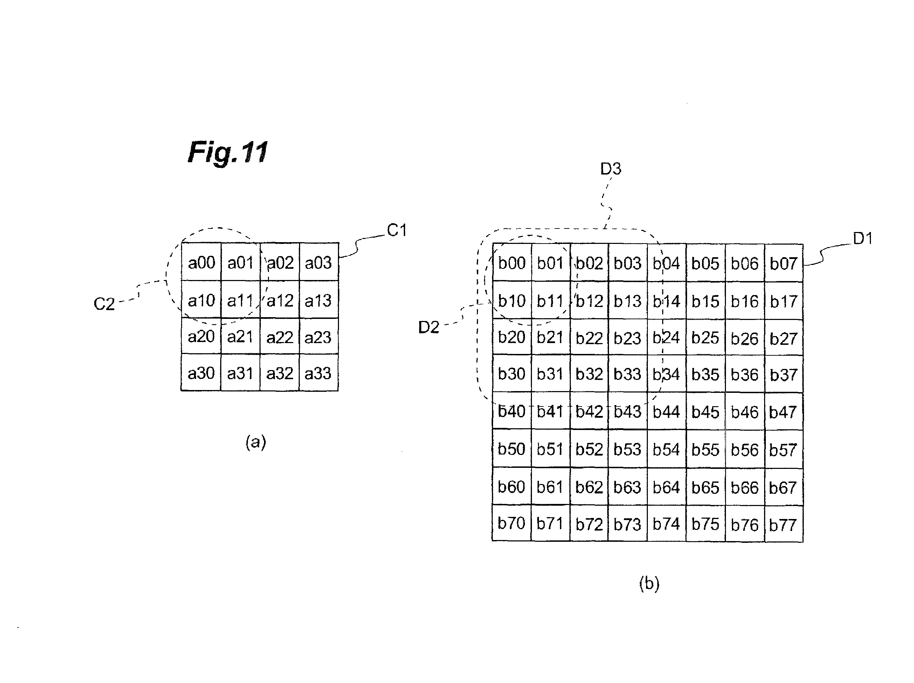

The functions of the input terminal 21 and the block generator 22 are similar to those of the input terminal 11 and the block generator 12 described above, and thus the description thereof is omitted herein.
The DCT transformer 23 transforms each of blocks generated by the block generator 22, into a signal in the frequency domain. The present embodiment assumes 4×4 DCT. The DCT transformer 23 outputs an output signal A(i,j) via a signal line M3 to the functional operation processor 27. An example of A(i,j) is shown by C1 in Fig. 11(a).

The upsampling filter 24 performs an interpolation process of the input image from the input terminal 21 to generate an image in a resolution different from that of the input image. The present embodiment illustrates a scheme wherein the size of the input image is enlarged four times (twice in the horizontal direction and twice in the vertical direction) by means of a 2-tapped filter (1, 1) of a horizontally and vertically separate type as an example. For example, an iterative super-resolution process may be used as the upsampling process. A downsampling process may also be applied instead of the upsampling process.

With input of an image after the upsampling process, the block generator 25 divides this image into blocks each consisting of 8x8 pixels.
The DCT transformer 26 transforms each of the blocks generated by the block generator 25, into a signal B(i,j) in the frequency domain by 8×8 DCT. An example of B(i,j) is shown by D1 in Fig. 11(a). Since the upsampled image has the size four times larger than that of the input image, the block division and DCT are carried out in a higher dimension than in the processes for the input image.

With input of the signals A(i,j), B(i,j) after the DCT, the functional operation processor 27 outputs a signal C(i,j) by a predetermined functional operation. At this time, the functional operation processor 27 makes the signal B(i,j) reflect some of frequency components of the signal A(i,j), and outputs the result as a signal C(i,j). The present embodiment uses a process of replacing coefficients D2 with coefficients C2, or a process of replacing coefficients D3 with coefficients C1, as shown in Fig. 11(b), but it is also possible to use the weighted addition.

The inverse DCT transformer 28 inversely transforms the input signal C(i,j) from the signal in the frequency domain into an image signal in the space domain, and then output the image signal in the space domain to the output terminal 29.
A frame memory not shown is connected to the output terminal 29, and the inversely transformed image signal is temporarily stored in this frame memory. When image signals corresponding to one image are stored up, they are outputted to a display device (not shown).

As described above, the image signal processing apparatus 2 in the present embodiment is able to relieve the blur of the input image that can occur in conversion of the resolution of the image, as well as the blur occurring in the reduction of coding distortion and in the edge enhancement. Therefore, it also becomes feasible to maintain the original details of the image, for the input image after the conversion of resolution.

From the invention thus described, it will be obvious that the embodiments of the invention may be varied in many ways. Such variations are not to be regarded as a departure from the spirit and scope of the invention, and all such modifications as would be obvious to one skilled in the art are intended for inclusion within the scope of the following claims.

## Claims

1. An image signal processing method comprising:
an importing step of importing a processing object image;
a generating step of performing a predetermined filtering process on the processing object image to generate a filtered image; and
an operation performing step of performing a functional operation between at least a portion of frequency components of the filtered image and at least a portion of frequency components of the processing object image.

2. An image signal processing method comprising:
an importing step of importing a processing object image;
a first acquiring step of acquiring frequency components of the processing object image;
a first generating step of performing a predetermined filtering process on the processing object image to generate a filtered image;
a second acquiring step of acquiring frequency components of the filtered image;
a second generating step of performing a functional operation between at least a portion of the frequency components of the filtered image and at least a portion of the frequency components of the processing object image to generate frequency components of a function-operated image; and
a transforming step of transforming the frequency components of the function-operated image into pixel values.

3. The image signal processing method according to Claim 1, wherein the filtering process comprises a process of converting the filtered image into an image in a resolution different from that of the processing object image.

4. An image signal processing apparatus comprising:
importing means for importing a processing object image;
first acquiring means for acquiring frequency components of the processing object image;
first generating means for performing a predetermined filtering process on the processing object image to generate a filtered image;
second acquiring means for acquiring frequency components of the filtered image;
second generating means for performing a functional operation between at least a portion of the frequency components of the filtered image and at least a portion of the frequency components of the processing object image to generate frequency components of a function-operated image; and
transforming means for transforming the frequency components of the function-operated image into pixel values.

5. The image signal processing apparatus according to Claim 4, wherein the second generating means replaces at least a portion of the frequency components of the filtered image with at least a portion of the frequency components of the processing object image to generate the frequency components of the function-operated image.

6. The image signal processing apparatus according to Claim 4, wherein the second generating means performs a weighted addition with at least a portion of the frequency components of the filtered image and at least a portion of the frequency components of the processing object image to generate the frequency components of the function-operated image.

7. The image signal processing apparatus according to Claim 4, wherein the filtering process comprises a process of converting the filtered image into an image in a resolution different from that of the processing object image.

8. An image signal processing program for letting a computer implement:
an importing function of importing a processing object image;
a first acquiring function of acquiring frequency components of the processing object image;
a first generating function of performing a predetermined filtering process on the processing object image to generate a filtered image;
a second acquiring function of acquiring frequency components of the filtered image;
a second generating function of performing a functional operation between at least a portion of the frequency components of the filtered image and at least a portion of the frequency components of the processing object image to generate frequency components of a function-operated image; and
a transforming function of transforming the frequency components of the function-operated image into pixel values.

9. The image signal processing program according to Claim 8, wherein the filtering process comprises a process of converting the filtered image into an image in a resolution different from that of the processing object image.
